## Europäisches Patentamt

## European Patent Office

## Office européen des brevets

(19)

(11) Veröffentlichungsnummer : **0 045 733**
**B1**

(12)

# EUROPÄISCHE PATENTSCHRIFT

(45) Veröffentlichungstag der Patentschrift :
23.05.84

(51) Int. Cl.³ : **B 23 D 1/26**, B 23 D 79/02

(21) Anmeldenummer : **81890104.3**

(22) Anmeldetag : **24.06.81**

(54) **Vorrichtung zum Abtragen des Aussenschweissgrates längsgeschweisster Rohre.**

(30) Priorität : **04.08.80 AT 4014/80**

(43) Veröffentlichungstag der Anmeldung :
**10.02.82 Patentblatt 82/06**

(45) Bekanntmachung des Hinweises auf die Patenterteilung : **23.05.84 Patentblatt 84/21**

(84) Benannte Vertragsstaaten :
**BE CH DE FR GB IT LI LU SE**

(56) Entgegenhaltungen :
CH-A- 380 484
DE-A- 2 602 639
DE-A- 2 635 105
DE-C- 575 811
DE-C- 707 485
FR-A- 1 558 572

(73) Patentinhaber : **VOEST-ALPINE Aktiengesellschaft
Werksgelände
A-4010 Linz (AT)**

(72) Erfinder ; **Hadinger, Helmut
Rüstorf 62
A-4690 Schwanenstadt (AT)**
Erfinder : **Hintermüller, Othmar
Tunnerweg 8
A-4020 Linz (AT)**

(74) Vertreter : **Hübscher, Gerhard, Dipl.-Ing. et al
Patentanwälte Dipl.-Ing. Gerhard Hübscher Dipl.-Ing.
Helmut Hübscher Dipl.-Ing. Heiner Hübscher Spittelwiese 7
A-4020 Linz (AT)**

**Beschreibung**

Die Erfindung bezieht sich auf eine Vorrichtung zum Abtragen des Außenschweißgrates längsgeschweißter Rohre mit einer Führung für das zu entgratende Rohr und mit wenigstens zwei Hobelstählen, die in Durchlaufrichtung des Rohres mit Abstand hintereinander an den Schweißgrat anstellbar gelagert sind.

Der beim Schweißen von aus Blechbändern kontinuierlich hergestellten Rohren entstehende Außenschweißgrat wird unmittelbar nach dem Schweißvorgang, üblicherweise eine Hochfrequenzwiderstandsschweißung, mit Hilfe eines Hobelstahles abgetragen, wobei ein rotglühender, dicker und steifer Span entsteht, der abgeführt werden muß. Zu diesem Zweck ist es bekannt, den Span auf einer Trommel od. dgl. aufzuwickeln. Reißt der Span ab, womit immer gerechnet werden muß, so muß das abgerissene Spanenede eingefangen und wieder der Trommel zugeführt werden, was einerseits durch das von der Trommel abstehende und mit der Trommel mitbewegte Ende des bereits aufgewickelten Spanes und anderseits durch die Geschwindigkeit des nachkommenden Spanes erschwert wird. In diesem Zusammenhang muß bedacht werden, daß der Schweißgrat mit einer Geschwindigkeit abgetragen wird, die der Durchlaufgeschwindigkeit des Rohres durch die Schweißanlage entspricht, und daß demnach auch der beim Abtragen des Schweißgrates entstehende Span mit dieser Geschwindigkeit abgeführt werden muß. Kann der abgerissene Span nicht unmittelbar nach dem Reißen wieder der Trommel zugeführt werden, so bleibt meistens nichts anderes übrig, als die Anlage stillzusetzen, was den Stillstand der gesamten Rohrstraße bedingt. Beim Wiederanfahren der Anlage entsteht außerdem ein Schweißfehler, der zu einem erheblichen Ausschuß führt.

Um den Außenschweißgrat nicht in einem Stück abtragen zu müssen, ist es bekannt, zwei unterschiedlich weit angestellte Hobelstäbe zu verwenden, so daß der Schweißgrat in zwei dünneren Spänen abgetragen werden kann. Das Abführen dieser dünneren Späne ist allerdings grundsätzlich mit den gleichen Nachteilen behaftet.

Zum Vermeiden eines durchgehenden Längsspanes ist es schließlich bekannt (DE-C-707 485), den Außenschweißgrat vor dem Abtragen mit einem Hobelstahl durch eine Kerbwalze einzukerben, so daß der beim Abhobeln des Schweißgrates entstehende Span in kurze Stücke zerfällt, die einfacher abgeführt werden können. Nachteilig beim Einsatz einer Kerbwalze ist, daß die Kerbung vergleichsweise hohe Antriebsenergien erfordert und der Außenschweißgrat durch die Kerben nicht bis zum Grund durchtrennt werden kann, weil sonst die Rohroberfläche nach dem Entgraten durch Kerbmarken beeinträchtigt wäre.

Der Erfindung liegt somit die Aufgabe zugrunde, eine Vorrichtung der eingangs geschilderten Art so zu verbessern, daß der Außenschweißgrat ohne Beeinträchtigung der Rohroberfläche abgetragen und die Spanabfuhr erheblich vereinfacht werden kann.

Die Erfindung löst die gestellte Aufgabe dadurch, daß der hinsichtlich der Rohrdurchlaufrichtung vordere Hobelstahl zum stückweisen Abtragen des Schweißgrates periodisch aus dem Schnitteingriff ziehbar ist, so daß der nachfolgende Hobelstahl die verbleibenden Gratstücke abträgt.

Da der vordere Hobelstahl den Schweißgrat in mit Abstand voneinander liegenden Stücken abträgt, wobei die verbleibenden Stücke dann von dem nachfolgenden Hobelstahl entfernt werden, wird der Schweißgrat stückweise abgetragen, so daß die anfallenden kurzen Späne über ein seitlich an das zu entgratende Rohr anschließendes Rutschblech einfach abgeführt werden können. Im Gegensatz zu der bekannten Einkerbung des Außenschweißgrates wird nach der Erfindung der Schweißgrat mit beiden Werkzeugen spanabhebend abgetragen, wobei sich vorteilhafte Verhältnisse ergeben, wenn die Länge der durch die beiden Hobelstähle abgetragenen Späne gleich groß ist. Durch das stückweise spanabhebende Abtragen des Schweißgrates wird eine hohe Oberflächenqualität für das entgratete Rohres sichergestellt und außerdem nur ein vergleichsweise geringer Energieaufwand benötigt.

Der dem periodisch aus dem Schnitteingriff zu ziehenden Hobelstahl nachgeordnete Hobelstahl kann stets angestellt bleiben, weil er lediglich die stehengelassenen Gratstücke abzutragen hat. Soll bei einer solchen Anordnung stets einer der beiden Hobelstähle im Schnitteingriff sein, so muß der Abstand der Hobelstähle voneinander entsprechend der Länge der abzutragenden Gratstücke gewählt werden. Ist die Länge der zunächst abgetragenen Stücke auf die Länge der vom nachgeordneten Hobelstahl zu entfernenden Gratstücke abgestellt, so ist der Abstand zwischen den beiden Hobelstählen entsprechend einem ungeraden Vielfachen der Länge der einzelnen abzutragenden Gratstücke zu bemessen.

Eine Möglichkeit, den vorderen Hobelstahl periodisch aus dem Schnitteingriff zu ziehen, besteht darin, den Hobelstahl radial zur Rohrachse hin- und herzubewegen. Eine bezüglich eines stoßfreien Schnitteingriffes vorteilhaftere Lösung ergibt sich allerdings, wenn der hinsichtlich der Rohrdurchlaufrichtung vordere Hobelstahl einen Vorschubantrieb entlang einer sich im Bereich der Schweißnaht an das Rohr anschmiegenden Bahn, vorzugsweise einer Kreisbahn, aufweist. Unter Berücksichtigung der Durchlaufbewegung des Rohres ergibt sich nämlich bei einer solchen Ausführung eine Hobelstahlbahn, die hinsichtlich des Rohres entlang einer Schraubenlinie verläuft, so daß der Hobelstahl allmählich in den Schweißgrat einsticht und auch allmählich aus dem Schweißgrat herausgezogen wird. Der damit verbundene Schnittverlauf ergibt für die stehen bleibenden Gratstücke sich verjüngende Endbereiche, die das stoßfreie Schneiden auch für den nachgeordneten Hobelstahl sicherstellen.

Der entlang einer sich an das Rohr anschmiegenden Bahn geführte Hobelstahl kann oszillierend hin- und herbewegt werden. Hinsichtlich des Antriebes ergeben sich jedoch einfache Verhältnisse, wenn die Bahn das Rohr umschließt und der Hobelstahl in einer Richtung umlaufend angetrieben wird. Um kleinere Stücklängen zu erhalten, könnten auch zwei oder mehrere Hobelstähle in einer entsprechenden Umfangsverteilung um das Rohr geführt werden.

In der Zeichnung ist der Erfindungsgegenstand beispielsweise dargestellt. Es zeigen :

Figur 1 den stückweisen Abtrag des Außenschweißgrates eines längsgeschweißten Rohres schematisch in Seitenansicht,

Figur 2 einen Schnitt nach der Linie II-II der Fig. 1 und

Figur 3 den möglichen Einsatz von drei Hobelstählen, um trotz der Notwendigkeit eines Werkzeugwechsels die Anlage nicht stillsetzen zu müssen.

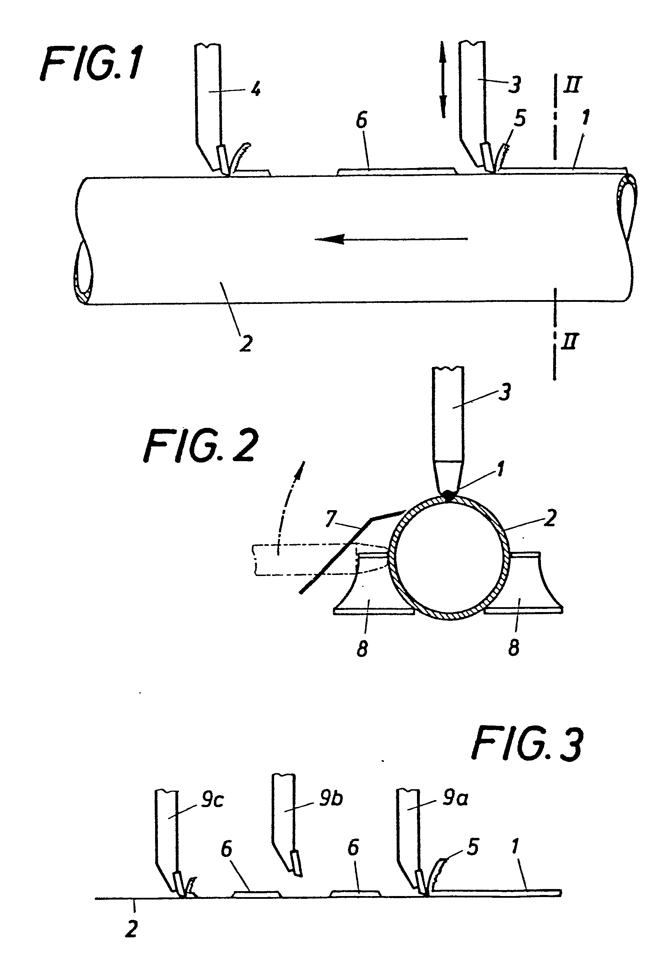

Wie der Fig. 1 zu entnehmen ist, wird der Außenschweißgrat 1 eines längsgeschweißten Rohres 2 nicht durchgehend, sondern stückweise abgetragen. Zu diesem Zweck sind zwei Hobelstähle 3 und 4 mit einem gegenseitigen Abstand in Durchlaufrichtung des Rohres vorgesehen, von denen der bezüglich der Durchlaufrichtung vordere Hobelstahl 3 periodisch aus dem Schnitteingriff gezogen werden kann. Zufolge des nur periodischen Schnitteingriffes werden durch den Hobelstahl 3 nur Gratstücke 5 begrenzter Länge abgetragen, die selbstverständlich auch nur Späne begrenzter Länge ergeben. Die zwischen diesen vom vorderen Hobelstahl 3 abgetragenen Gratstücken verbleibenden Gratstücke 6 werden durch den nachfolgenden Hobelstahl 4 entfernt. Die entstehenden Späne können, da sie vergleichsweise kurz sind, über eine seitlich an das zu entgratende Rohr anschließende Rutsche 7 ohne Schwierigkeiten abgeführt werden, wie dies in Fig. 2 gezeigt ist.

Um das abschnittsweise Abtragen des Schweißgrates mit Hilfe des vorderen Hobelstahles 3 sicherzustellen, kann der Hobelstahl 3 bezüglich des Rohres in radialer Richtung hin- und herbewegt werden. Eine andere Möglichkeit besteht darin, den Hobelstahl 3 entlang einer sich im Bereich des Schweißgrates 1 an das Rohr 2 anschmiegenden Kreisbahn zu bewegen, wie dies in Fig. 2 strichpunktiert angedeutet ist. Auch bei einer solchen Hobelstahlführung wird für ein stückweises Abtragen des Schweißgrates gesorgt, wobei der Hobelstahl 3 drehschwingend hin- und herbewegt oder in einer Umlaufbewegung angetrieben werden kann.

Daß das Rohr 2 im Bereich der Hobelstähle 3 und 4 entsprechend abgestützt sein muß, versteht sich von selbst. In Fig. 1 sind daher auch die in Fig. 2 angedeuteten Stützrollen 8 aus Übersichtlichkeitsgründen nicht dargestellt.

Gemäß Fig. 2 kommen drei Hobelstähle 9a, 9b und 9c zum Einsatz. Eine solche Anordnung ermöglicht es, stets einen Hobelstahl auszuwechseln. Für die Entgratung dienen gemäß der Darstellung der Hobelstahl 9a und der Hobelstahl 9c, während der Hobelstahl 9b ausgewechselt werden kann, ohne die Rohrstraße stillsetzen zu müssen. Der Hobelstahl 9a muß dabei periodisch aus dem Schnitteingriff gezogen werden. Ist der Hobelstahl 9b ausgewechselt, so kann der Hobelstahl 9a oder der Hobelstahl 9c gewechselt werden, da mit dem Hobelstahl 9b als vorderer oder nachgeordneter Hobelstahl zwei Hobelstähle einsatzbereit sind, um den Schweißgrat 1 stückweise abtragen zu können.

Obwohl dies nicht dargestellt ist, können die Hobelstähle 3 und 4 auch in vorteilhafter Weise abwechselnd nacheinander zum Einsatz kommen. Zu diesem Zweck muß der Abstand zwischen den Hobelstählen 3 und 4 so gewählt werden, daß am Ende der Schnittperiode des vorderen Hobelstahles 3 der hintere Hobelstahl 4 zum Schnitteinsatz kommt. Nach dem Abtrag der vom vorderen Hobelstahl 3 nicht erfaßten Gratstücke 6 ist jeweils wieder der vordere Hobelstahl 3 anzustellen.

## Ansprüche

1. Vorrichtung zum Abtragen des Außenschweißgrates (1) längsgeschweißter Rohre (2) mit einer Führung (8) für das zu entgratende Rohr (2) und mit wenigstens zwei Hobelstählen (3, 4), die in Durchlaufrichtung des Rohres (2) mit Abstand hintereinander an den Schweißgrat (1) anstellbar gelagert sind, dadurch gekennzeichnet, daß der hinsichtlich der Rohrdurchlaufrichtung vordere Hobelstahl (3) zum stückweisen Abtragen des Schweißgrates (1) periodisch aus dem Schnitteingriff ziehbar ist, so daß der nachfolgende Hobelstahl (4) die verbleibenden Gratstücke (6) abträgt.

2. Vorrichtung nach Anspruch 1, dadurch gekennzeichnet, daß der hinsichtlich der Rohrdurchlaufrichtung vordere Hobelstahl (3) einen Vorschubantrieb entlang einer sich im Bereich der Schweißnaht an das Rohr (2) anschmiegenden Bahn, vorzugsweise einer Kreisbahn, aufweist.

3. Vorrichtung nach Anspruch 2, dadurch gekennzeichnet, daß die Bahn des vorderen Hobelstahles (3) das Rohr (2) umschließt.

## Claims

1. Apparatus for removing the external weld burr (1) from longitudinally welded tubes (2), comprising a guide (8) for the tube (2) to be deburred and at least two planing tools (3, 4), which are spaced apart in the direction of travel of the tube (2) and engageable with the weld burr (1), characterized in that the planing tool (3) which is the leading planing tool with respect to the travel of the tube is adapted to be periodically retracted from cutting engagement so that the trailing planing tool (4) removes the remaining burr portions (6).

2. Apparatus according to claim 1, characterized in that the planing tool (3) which is the leading planing tool with respect to the travel of the tube is provided with a feed drive for moving said tool along a preferably circular path, which hugs the tube (2) adjacent to the seam weld.

3. Apparatus according to claim 2, characterized in that the path of the leading planing tool (3) surrounds the tube (2).

**Revendications**

1. Dispositif pour enlever la bavure extérieure de soudage (1) de tubes (2) soudés longitudinalement, comportant un guide (8) pour le tube à ébavurer (2) et au moins deux lames de rabot (3, 4) qui sont montées avec espacement l'une derrière l'autre dans la direction de passage du tube (2) de manière à pouvoir être approchées de la bavure (1) de soudage, caractérisé par le fait que la lame (3) de rabot, qui se trouve en avant relativement au sens de passage du tube, peut être retirée périodiquement de la coopération de coupe pour enlever par morceaux la bavure de soudage, de sorte que la lame de rabot (4) suivante enlève les morceaux de bavure (6) restants.

2. Dispositif selon la revendication 1, caractérisé par le fait que la lame (3) de rabot, qui est en avant relativement au sens de passage du tube, présente un entraînement d'avancement le long d'une trajectoire s'adaptant au tube (2) dans la région de la soudure, de préférence d'une trajectoire circulaire.

3. Dispositif selon la revendication 2, caractérisé par le fait que la trajectoire de la lame de rabot (3) antérieure entoure le tube (2).

*FIG.1*

*FIG.2*

*FIG.3*

1